# EUROPÄISCHE PATENTSCHRIFT

(11) **EP 0 966 726 B1**
(45) Veröffentlichungstag und Bekanntmachung des Hinweises auf die Patenterteilung: **05.06.2002**
(21) Anmeldenummer: 98905420.0
(22) Anmeldetag: 11.02.1998
(51) Int. Cl.: G06K 19/04

(54) **VERFAHREN ZUR HERSTELLUNG VON KARTENFÖRMIGEN DATENTRÄGERN**
PROCESS FOR MANUFACTURING CARD-SHAPED DATA CARRIERS
PROCEDE DE FABRICATION DE SUPPORTS DE DONNEES EN FORME DE CARTES

(30) Priorität: 11.02.1997 DE 19705170
(43) Veröffentlichungstag der Anmeldung: 29.12.1999
(73) Patentinhaber: Giesecke & Devrient GmbH, 81677 München (DE)
(72) Erfinder: BLOME, Rainer, D-33106 Paderborn (DE); GRÜN, Herbert, D-85586 Poing (DE); WASCHK, Volker, D-82031 Grünwald (DE)
(74) Vertreter: Klunker . Schmitt-Nilson . Hirsch
(86) Internationale Anmeldenummer: EP9800772
(87) Internationale Veröffentlichungsnummer: WO9835316

(56) Entgegenhaltungen:
- EP-A- 0 689 164
- PATENT ABSTRACTS OF JAPAN vol. 016, no. 290 (M-1272), 26.Juni 1992 -& JP 04 077298 A (DAINIPPON PRINTING CO LTD), 11.März 1992,
- PATENT ABSTRACTS OF JAPAN vol. 016, no. 270 (M-1266), 17.Juni 1992 -& JP 04 065295 A (DAINIPPON PRINTING CO LTD), 2.März 1992,
- PATENT ABSTRACTS OF JAPAN vol. 016, no. 078 (P-1317), 25.Februar 1992 & JP 03 267744 A (OMRON CORP), 28.November 1991,

## Beschreibung

Die Erfindung betrifft ein Verfahren zur Herstellung von kartenförmigen Datenträgern und eine Vorrichtung zur Durchführung des Verfahrens.

Kartenförmige Datenträger können beispielsweise als Magnetstreifenkarten oder Chipkarten ausgebildet sein, die als Scheckkarte, Kreditkarte oder elektronische Börse zur Durchführung finanzieller Transaktionen eingesetzt werden können, als Ausweis für eine Zutritts- oder Zugriffskontrolle dienen können usw. Derartige Karten werden in der Regel aus Kunststoff und/oder Papier bzw. Karton hergestellt. Kunststoffkarten werden je nach den gewünschten Eigenschaften und zulässigen Herstellungskosten durch Laminieren mehrerer Lagen oder im Spritzgussverfahren bzw. durch andere geeignete Verfahren hergestellt. Für die folgende Beschreibung wird exemplarisch eine laminierte Chipkarte herangezogen, wobei die beschriebenen Verfahren auch für andersartig hergestellte Karten und auch für andersartige Kartentypen verwendbar sind.

Laminierte Chipkarten bestehen aus mehreren Lagen: z.B. obere Schutzschicht, bedruckte obere Deckschicht, eine oder mehrere Zwischenlagen, bedruckte untere Deckschicht, untere Schutzschicht. Zur Herstellung derartiger Karten werden die einzelnen Lagen als Folien mit einer bestimmten Bogengröße hergestellt. Dann werden die Bögen für die obere und untere Deckschicht bedruckt. Anschließend werden die verschiedenen Bögen übereinander geschichtet und unter Druck und Temperatur zu einem einzigen Bogen zusammengeschweißt. Aus diesem Bogen werden die einzelnen Rohkartenkörper ausgestanzt. Ebenso ist auch eine Endloskartenfertigung durch Rollenlaminierung möglich. Die einzelnen Lagen werden hierbei in Form von langen Bahnen einer Rollenlaminiermaschine zugeführt, dort zu einer einzigen Bahn verbunden und anschließend in Einzelkarten unterteilt.

Bisher ist es so, dass nach den oben genannten Herstellungsschritten jede Karte einzeln manuell einer Qualitätsprüfung unterzogen wird; d.h. jede Karte wird manuell mit einer Referenzkarte verglichen. Liegt die zu prüfende Karte bei vorgegebenen Kriterien, wie z.B. Kontrast der Farben, kein Grat an den Kartenrändern, keine Kratzer, keine Fusseln usw. innerhalb einer vorgegebenen Toleranz, so wird sie zur Weiterverarbeitung weitergeleitet. Hält die Karte der, da sie von einem Menschen geprüft wird, subjektiven Prüfung nicht stand, endet sie als Ausschuss. Die Gutkarten werden dann in das Magazin eines Vereinzelers gelegt, der die Karten über eine Kartentransporteinrichtung einer Fräsmaschine zuführt. Mit einem Taschenfräszyklus werden Kavitäten für Chipmodule hergestellt, mit denen die Karten bestückt werden sollen. Anschließend werden die Chipmodule in die Kavitäten der Karten eingesetzt und mit einem Kleber in den Kavitäten fixiert. Dieser Vorgang wird Implantation genannt.

Dieses Verfahren zur Herstellung der Kavitäten wird bisher nur bei Chipkarten aus Bogenware verwendet, da es bei einstückigen Kunststoffkarten (z.B. aus ABS), die in einem Spritzgussverfahren hergestellt werden, einfacher und billiger ist, die Kavität gleich beim Spritzen mit herzustellen.

Probleme hierbei ergeben sich daraus, dass die oben genannte Prüfung, da sie manuell ist, subjektiv, zeitaufwendig und, da Menschen nicht immer so konzentriert sind, wie es erforderlich wäre, fehlerbehaftet ist, und somit zuviele Ausschusskarten bis zur Endkontrolle gelangen. Weitere Ausschusskarten entstehen dadurch, dass Karten, die mit einer falschen Lage an der Fräsmaschine ankommen, auch falsch gefräst werden. Ein weiteres Problem ist es, dass die Taschenfräsmaschine für einige Kartentypen in Bezug auf Größe und Form des Chipmoduls neu eingerichtet werden müssen.

Die geschilderten Probleme können nicht nur bei der Herstellung der Kavitäten auftreten, sondern in ähnlicher Form bei jedem Herstellungsschritt, bei dem Veränderungen an den Karten vorgenommen werden oder bei Herstellungsschritten, bei denen Karten eines bestimmten Typs erwartet werden bzw. bei denen die Karten einen definierten Zustand aufweisen müssen oder eine definierte räumliche Lage einnehmen müssen und bei denen ein Abweichen vom erwarteten Typ/Zustand/Lage nicht auszuschließen ist.

Aufgabe der Erfindung ist es daher, bei der Herstellung von kartenförmigen Datenträgern bei reduziertem personellen Aufwand einen möglichst hohen Qualitätsstandard zu erreichen und die Ausschussraten möglichst gering zu halten.

Diese Aufgabe wird durch die kennzeichnenden Merkmale der in Patentanspruch 1 beschriebenen Erfindung gelöst.

Gemäß der Erfindung wird vor jedem Herstellungsschritt, bei dem Veränderungen an den Karten vorgenommen werden bzw. der in Bezug auf die räumliche Lage bzw. Typ oder Zustand der Karte kritisch ist, eine optische Prüfung durchgeführt.

Diese Prüfung kann besonders vorteilhaft bei Herstellungsschritten eingesetzt werden, bei denen es auf den Typ oder Zustand bzw. die räumliche Lage der Karten ankommt. Auf diese Weise kann zum einen sichergestellt werden, dass der Herstellungsschritt nicht irrtümlicherweise an Karten durchgeführt wird, die für diesen Herstellungsschritt nicht vorgesehen sind bzw. die eine andere als für diesen Herstellungsschritt vorgesehene räumliche Lage einnehmen. Beides kann zu Ausschusskarten führen und es wären sowohl die Kosten für die vorhergehenden Herstellungsschritte inclusive des betrachteten Herstellungsschrittes als auch die aufgewendeten Materialkosten verloren.

Zum anderen wird verhindert, dass der Herstellungsschritt an Karten durchgeführt wird, die die für diesen Herstellungsschritt festgelegten Mindestqualitätsanforderungen nicht erfüllen. Dadurch wird z.B. vermieden, dass für eine Ausschusskarte weitere Produktionskosten aufgewendet werden.

Die genannten Variationen der Erfindung können sowohl bei Einzelkarten als auch bei Bögen oder Bahnen, die jeweils mehrere Karten aufweisen, angewendet werden. Wie die Prüfung dann jeweils im Einzelnen durchgeführt wird, ist nachfolgend anhand einiger ausgewählter Ausführungsbeispiele beschrieben.

Zur Veranschaulichung der Erfindung wird eine Taschenfräsanlage herangezogen, mit deren Hilfe Kartenkörper mit Kavitäten zur Aufnahme von Chipmodulen versehen werden. Die Taschenfräsanlage wird um eine optische Erkennungseinheit erweitert, die gemäß der Erfindung im Verfahrensablauf vor der Taschenfräsmaschine angeordnet ist und mit einer Steuerung verbunden ist, die entscheidet, ob die jeweilige Karte der Fräsmaschine zum Fräsen der Kavität zugeführt bzw. ob die gefräste Karte der Weiterverarbeitung zugeleitet wird. Es gibt von der Anlage, die die Erfindung beschreibt, mehrere Ausführungen. Im Folgenden werden jeweils Ausführungen beschrieben, bei denen die optische Erkennungseinheit vor der Taschenfräsmaschine angeordnet ist.

In einer ersten Ausführung wird die oben genannte Prüfung noch manuell durchgeführt, wobei sie allerdings nicht an der einzelnen Karte, sondern am Bogen - also vor dem Ausstanzen - ausgeführt wird. Dies geht wesentlich schneller als die Überprüfung von Einzelkarten. Ein weiterer Vorteil der Überprüfung von Bogen ist, dass immer wieder auftretende Systemfehler, z.B. durch eine fehlerhafte Druckwalze oder verkratzte Laminierbleche erzeugte Fehler, erkannt werden. Die Prüfer überprüfen Vorder- und Rückseite des Bogens und markieren die Ausschusskarten. Sie markieren die Karten z.B. mit einer fluoreszierenden Farbe, mit einem Filzstift oder lochen sie. Die aufgebrachten Markierungen müssen nicht notwendigerweise im sichtbaren Spektralbereich liegen, sondern es kann beispielsweise auch eine im Infrarot-Bereich nachweisbare Farbe oder eine UV-aktivierbare Substanz verwendet werden. Anschließend werden die Karten ausgestanzt und gestapelt. Sie werden dann in einen Vereinzeler gelegt, von dem aus die Karten einzeln durch eine Kartentransporteinrichtung, z.B. ein Förderband, ein Roboterarm mit Greifsystem oder ein Drehteller der Taschenfräsmaschine zugeführt werden. Vor oder an der Taschenfräsmaschine ist dann erfindungsgemäß eine optische Erkennungseinheit angebracht, die erkennt, ob eine Karte markiert ist. Wenn mit einer fluoreszierenden oder UV-aktiven Markierung gearbeitet wird, wird die Karte mit UV-Licht bestrahlt. Liegt keine Markierung vor, so wird kein Fluoreszenzlicht reflektiert. Ist auf der entsprechenden Karte eine fluoreszierende Markierung, so wird Fluoreszenzlicht reflektiert. Dies wird von einem Detektor registriert. Ähnlich wird bei Markierungen vorgegangen, die im Infrarot-Bereich detektierbar sind. Wird mit Filzstift gearbeitet, ist die optische Erkennungseinheit eine Kamera. Die für die Erkennung von Systemfehlern erforderliche Rekonstruktion der ursprünglichen Position der Karte innerhalb eines Bogens kann anhand der Reihenfolge der Einzelkarten erfolgen. Ebenso ist es auch möglich, die Karten mit einer Markierung zu versehen, aus der ihre ursprüngliche Position innerhalb des Bogens ermittelbar ist. Diese Markierung kann beispielsweise aufgedruckt werden oder durch entsprechende Ausgestaltung der Laminierbleche beim Laminieren abgeformt werden. Die Markierung wird dabei entweder so gestaltet oder so angeordnet, z.B. im Bereich der Kavität, dass sie das Erscheinungsbild der Karte nicht stört.

Eine mit der optischen Erkennung verbundene Steuerung (im einfachsten Fall ein Relais), die mit der Kartentransporteinrichtung und der Fräse verbunden ist, entscheidet nach der optischen Prüfung über den weiteren Werdegang der Karte:
- keine Markierung: das normale Programm wird abgefahren, d.h. Einlegen der Karten, die in Magazinen gestapelt sind, in den Vereinzler, Transport zur Taschenfräsmaschine, Fräsen der Kavitäten, Weitertransport zu einer Stapelvorrichtung, Stapeln,
- eine Markierung: das normale Programm wird unterbrochen bzw. abgeändert, d.h.: markierte Karten werden vor oder nach (dann bleibt die Fräse ausgeschaltet) der Fräse einer Stapelvorrichtung für Ausschusskarten zugeführt.

Bei dieser ersten Ausführung werden Karten, die in falscher Lage ankommen (seitenverkehrt oder Vorder- und Rückseite vertauscht) nicht erkannt und somit zu Ausschusskarten, da sie dann an falscher Stelle gefräst werden. Deshalb wird bei dieser ersten Ausführung auch kein Roboterarm verwendet, da er für diese Ausführung zu teuer wäre, und sein Fähigkeitsspektrum überhaupt nicht ausgenutzt würde.

Die Zuführung zu der Stapelvorrichtung geschieht bei der Version, bei der der Kartentransport mittels eines Förderbands erfolgt, mit einer Weiche und bei der Version, bei der der Kartentransport mittels eines Drehtellers erfolgt, z.B. dadurch, dass der Drehteller über dem Ausschusskarten-Stapelmagazin anhält und die entsprechende Karte - sie liegt in einer Karten-Aufnahmetasche, deren Boden von einem weiteren Teller, der an einer bestimmten Stelle eine Aussparung besitzt, gebildet wird - dadurch in das Stapelmagazin fällt, dass der Bodenteller relativ zum Drehteller solange verdreht, bis die Aussparung unter die Aufnahmetasche ankommt.

In einer anderen Version steht der Bodenteller, der wiederum eine Aussparung hat, still. Eine Karte fällt nur dann hindurch in den Ausschussschacht, wenn der Drehteller an der gleichen Position anhält, an der der Bodenteller seine Aussparung hat.

Weitere Möglichkeiten bei der Verwendung von einem Drehteller sind, die Karten von unten her wegzublasen und über eine Rampe dem Magazin zuzuführen oder sie pneumatisch von einer entsprechenden Vorrichtung anzusaugen und dann dem Ausschussmagazin zuzuführen. Es gibt hier sicherlich noch mehr mögliche Ausführungsformen.

Bei einer zweiten Ausführung fällt die manuelle Prüfung ganz weg. Die optische Erkennungseinheit besteht dann nicht mehr aus einem einfachen Detektor, sondern aus einer digitalen Kamera, die mit einem Rechner verbunden ist. Wie in der ersten Ausführungsform der Steuerung muss auch hier der Rechner die Kartentransporteinrichtung, die Fräsmaschine und die Weiche ansteuern. Die Kartenherstellung selber bleibt gleich: Herstellung von Bögen durch Lamination einzelner Schichten, Ausstanzen der einzelnen Karten, manuelles Füllen der Karten in das Magazin des Vereinzelers, Weitertransport mit einer Kartentransporteinrichtung zur Taschenfräsmaschine, Ausfräsen der Kavität für das Chipmodul, Weitertransport zu einer Stapelvorrichtung, manueller Transport zum Implanter, Implantierung des Chipmoduls. Die Kamera, die - was die Fertigungsrichtung angeht - vor der Fräsmaschine installiert ist, nimmt ein Bild von einer Karte auf. Dies geschieht entweder während in die vorher geförderte Karte eine Tasche gefräst wird, also in einer Stillstands-Phase, oder während der laufenden Förderung, was bei der Aufnahmegeschwindigkeit heutiger Kameras nicht zu einem Verschwimmen des aufgenommenen Bildes führt. Der mit der Kamera verbundene Rechner hat ein Referenzbild einer Musterkarte gespeichert. Der Rechner entscheidet jetzt selbständig über den weiteren Werdegang der Karte. Hat die Karte keinen Kratzer, und liegen Schärfe, Kontrast und Farben des Layouts innerhalb einer vorgegebenen Toleranz, so wird die Karte zum Fräsen weitergeleitet. Ist dies nicht der Fall, oder kommt die Karte in falscher Lage - z.B. auf dem Rücken oder seitenverkehrt - bei der Kamera an, so wird die entsprechende Karte - z.B. bei Verwendung eines Förderbandes über eine Weiche, die der Fräsmaschine vor- oder nachgeordnet ist - am Fräsvorgang vorbeigeleitet und einer Stapelvorrichtung für Ausschusskarten zugeführt oder sie wird durch eine adäquate Vorrichtung gewendet und in der richtigen Lage der Fräsmaschine zugeführt. Ist die Weiche nachgeschaltet, so lässt die Fräsmaschine - angesteuert durch den Rechner - die Karte passieren. Bisher mussten Ausschusskarten manuell von den Gutkarten nach dem Fräsen getrennt werden. Karten, die in falscher Lage an der Fräsmaschine ankamen, wurden durch das Fräsen zu Ausschuss. Es ist aber auch möglich, Ausschusskarten und die Karten, die in falscher Lage ankamen, durch eine schwenkbare, rechnerangesteuerte Weiche separaten Stapelvorrichtungen zuzuführen. Dies lässt sich auch durch das Hintereinanderschalten von zwei Weichen bewerkstelligen. Oder man nimmt eine Weiche, die auf drei Ausgänge - Fräse, Ausschusskartenstapelvorrichtung, wiedereinzulegende Karte, die in falscher Lage ankamen - schwenken kann. Oben genannte wiedereinzulegende Karten können aber auch durch eine entsprechende Kartenwendevorrichtung sofort der Fräse zugeführt werden. Die Gutkarten werden, nachdem sie gestapelt wurden, entweder manuell zum Implanter gebracht oder gleich - ohne zu stapeln - zum Implanter weitergefördert. Auch bei der Verwendung eines Drehtellers als Kartentransporteinrichtung gibt es wieder verschiedene Möglichkeiten:
- der Drehteller hält über dem entsprechenden Schacht (Ausschusskarten, wiedereinzulegende bzw. zu wendende Karten) und eine entsprechende Relativdrehung des Bodentellers führt zum Stapeln (siehe oben),
- die zu wendenden Karten fallen auf eine Wendevorrichtung und werden in richtiger Lage wieder dem Drehteller zugeführt oder die Wendevorrichtung befindet sich direkt im Drehteller.

Die Verwendung eines Roboterarms als Kartenfördereinrichtung ist die teuerste aber auch die am leichtesten zu realisierende Lösung. Der Roboterarm holt sich eine Karte aus dem bereitgestellten Magazin, legt sie unter die Kamera, ein Bild wird aufgenommen und mit einem Referenzbild im Rechner verglichen, die Karte wird gedreht, ein Bild der Rückseite wird aufgenommen und wiederum mit dem entsprechenden Referenzbild verglichen. Dann veranlasst der Rechner den Arm zu den weiteren Schritten: Weiterförderung zur Fräse oder zur Stapeleinrichtung für Ausschusskarten, oder Drehen der Karte in die richtige Lage und Weiterförderung zur Fräse.

Diese Möglichkeit - die Karten von beiden Seiten aufzunehmen - ist die vorteilhafteste Ausführung der Erfindung, da die Fehlerquote am geringsten und die Durchlaufzeiten am kürzesten sind. Sie lässt sich nicht nur bei der Verwendung eines Roboterarms, sondern auch bei der Verwendung von Drehteller oder Band als Kartentransporteinrichtung realisieren.

Das beidseitige Aufnehmen der Karte kann auf drei Weisen geschehen:
- Verwendung von zwei hintereinander angeordneten Kameras und zwei Wendevorrichtungen (Aufnahme einer Kartenseite, Transport, Wenden, Transport, Aufnahme der zweiten Kartenseite, Transport, evtl. nochmaliges Wenden in Bezug auf Vorder- und Rückseite sowie auf Seitenvertauschung, Transport zur Fräse);
- Verwendung einer Kamera und einer Wendevorrichtung;
- Verwendung von einer oberhalb und einer unterhalb der durchlaufenden Karten angeordneten Kamera und einer Wendevorrichtung (diese wird dann nicht für die Aufnahmen, sondern zum Drehen der Karten in die richtige Lage gebraucht).

Der Rechner steuert den kompletten Ablauf: Entnahme der einzelnen Karte aus dem Vereinzler, Transport zur Kamera, Aufnahme einer Seite, Vergleich mit Referenzbildern (Vorder-, Rückseite), Wenden der Karte, Vergleich mit Referenzbildern, Entscheidung treffen (Ausschusskarte, richtige Lage), Drehen der Karte in die richtige Lage und Weitertransport zur Fräse oder gleich Transport zu einem Ausschusskartenmagazin (dies ist die zweite Version).

Da es verschiedene Kartentypen gibt, die sich durch Größe, Form und Tiefenpofil unterscheiden, ist es eine vorteilhafte Weiterbildung der Erfindung, wenn die optische Erkennung, den entsprechenden Kartentyp erkennend, das entsprechende Fräsprogramm aufruft, bzw. die Karte zurückweist, wenn der Kartentyp nicht dem erwarteten Kartentyp entspricht.

Zur Lageerkennung ist es nicht unbedingt erforderlich, dass die gesamte Kartenoberfläche ausgewertet wird. Man kann sich auch auf einen Ausschnitt aus der Kartenoberfläche beschränken. Um die Lage der Karte zu ermitteln, definiert man einen Ausschnitt aus dem Druckbild der Kartenoberfläche als Referenz. Diese Referenz wird dabei so festgelegt, dass aus ihr die Lage der Karte eindeutig ableitbar ist. Somit ist für jedes neue Layout des Druckbildes eine neue Referenz zu definieren. Alternativ zu dieser Vorgehensweise kann man auch ein geeignetes Symbol definieren und dieses im Bereich der späteren Kavität auf die Karte aufdrucken. Dieses Symbol könnte unabhängig vom Layout der Kartenoberfläche immer das gleiche sein, so dass bei einem Wechsel des Layouts keine Anpassung erforderlich ist.

Die optische Auswertung des Druckbildes bzw. von Ausschnitten des Druckbildes kann nicht nur für die Lageerkennung herangezogen werden, sondern auch dann, wenn in einem Herstellungsprozess mit verschiedenen Kartentypen und/oder mit verschiedenen Modultypen gearbeitet wird und sichergestellt werden soll, dass der richtige Kartentyp und der richtige Modultyp zusammengeführt werden. Falls mehrere Modultypen zur Verfügung stehen, können diese beispielsweise anhand des Kontaktlayouts oder über eine auf dem Modul aufgebrachte Herstellerkennung unterschieden werden.

Die beschriebenen optischen Prüfverfahren eignen sich nicht nur im Zusammenhang mit Herstellungsschritten, die an Einzelkarten durchgeführt werden. Sie können auch bei Herstellungsschritten eingesetzt werden, die an Bögen oder Bahnen vorgenommen werden. Ergibt die optische Prüfung eines Bogens, dass mehrere Karten die Qualitätsanforderungen nicht erfüllen, so kann statt einer Markierung der betreffenden Karten und anschließende Absonderung dieser Karten auch ein Aussondern des gesamten Bogens in Erwägung gezogen werden. Für diese Variante wird man sich in der Regel dann entscheiden, wenn soviele Karten betroffen sind, dass ein Aussondern des gesamten Bogens kostengünstiger ist.

Um die Qualität der Fräsung zu prüfen, kann eine optische Prüfstation, bezogen auf die Kartentransportrichtung nach der Fräsanlage angeordnet sein. Mit dieser Prüfstation kann die mit der Fräsanlage hergestellte Kavität bezüglich Lage, Tiefe und Form geprüft werden. Ergibt die Prüfung eine nicht ausreichende Qualität der Fräsung, so kann die Karte als Ausschusskarte abgesondert werden. Darüber hinaus kann das Prüfungsergebnis auch dazu verwendet werden, die Fräse nachzujustieren bzw. eine Nachjustierung zu veranlassen. Aus dem Prüfungsergebnis kann auch abgeleitet werden, ob die Kante der gefrästen Kavität einen Grat aufweist, ob die Kavität beispielsweide durch Späne verschmutzt ist und ob die Fräse defekt ist und zu erwarten ist, dass ohne Eingriff kontinuierlich der gleiche Fehler produziert wird.

Optische Prüfstationen können nicht nur bei der Herstellung laminierter Karten sondern beispielsweise auch bei der Spritzgussfertigung eingesetzt werden. Die Prüfstation ist dabei im Anschluss an die Spritzgussmaschine angeordnet und prüft die von der Spritzgussmaschine ausgegebenen Karten. Dies empfiehlt sich insbesondere dann, wenn die von der Spritzgussmaschine ausgegebenen Karten bereits ein Druckbild und/oder ein Modul aufweisen.

Die Erfindung wird nachstehend anhand der in den Zeichnungen dargestellten Ausführungsformen beschrieben. Dabei wird die Erfindung zunächst beispielhaft anhand der verschiedenen Ausführungsformen einer Taschenfräsanlage erläutert und anschließend das erfindungsgemäße Prinzip in allgemeiner Form dargelegt.

Es zeigen:
- Fig. 1: eine herkömmliche Taschenfräsanlage,
- Fig. 2, 3, 4a und 4 b: verschiedene Ausführungsformen der erfindungsgemäßen Taschenfräsanlage,
- Fig. 5a und 5b: jeweils eine schematische Darstellung einer Produktionsanlage für kartenförmige Datenträger zur Veranschaulichung des der Erfindung zugrundeliegenden Prinzips und
- Fig. 6: eine für die Lageprüfung markierte Karte.

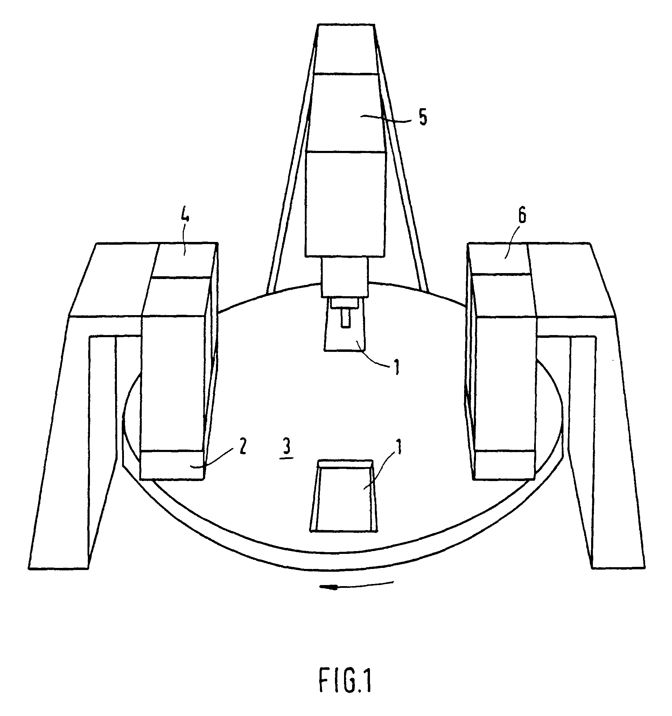

Fig. 1 zeigt eine herkömmliche Taschenfräsanlage, bestehend aus Drehteller 3, in den Drehteller eingearbeitete Aufnahmetaschen 1 für die Chipkarten, Vereinzeler 2 mit an ihm angebrachten Magazin 4, Taschenfräsmaschine 5, Karten-Stapelmagazin 6.

Ablauf: Füllen der Karten in das Magazin 4, Vereinzeln der Karten, Mitnahme der Karten in den Aufnahmetaschen 1 des Drehtellers 3, Transport zur Taschenfräsmaschine 5, Fräsen der Kavitäten für die Chipmodule, Transport zum Karten-Stapelmagazin 6, Stapeln der Karten im Karten-Stapelmagazin 6.

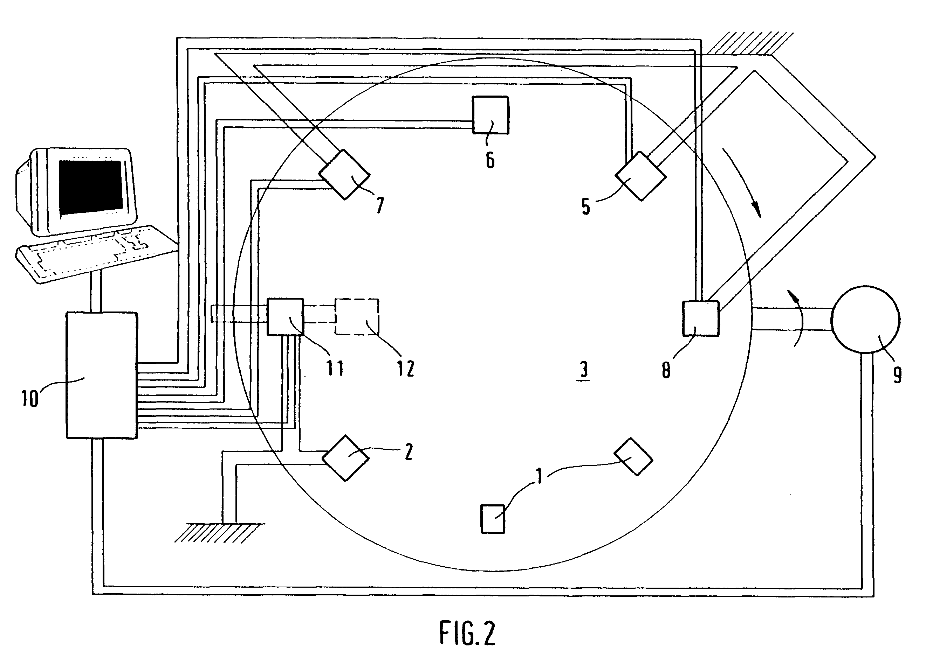

Fig. 2 zeigt eine erste Ausführungsform der erfindungsgemäßen Taschenfräsanlage, bestehend aus Steuerung 10, Aufnahmetaschen 1 für die Chipkarten, Vereinzeler 2, Kameras 11 und 12- eine oberhalb und eine unterhalb des Drehtellers angebracht - Ausschussskarten-Stapelmagazin 7, Kartenwender 6, Taschenfräsmaschine 5, Gutkarten-Stapelmagazin 8, Antriebseinheit 9 für den Drehteller 3, Drehteller 3.

Die obere Kamera 11 ist direkt gegenüber der unteren Kamera 12 angebracht und der Boden der Aufnahmetaschen für die Chipkarten 1 ist durchsichtig.

Ablauf: Füllen der Karten in das Magazin des Vereinzelers 2, Vereinzeln, Transport, Aufnahme von Bildern der Vorder- und Rückseite der Chipkarten, Transport, Stapeln der Ausschusskarten im Ausschusskarten-Stapelmagazin 7, Transport, Wenden bzw. Drehen der in falscher Lage angekommenen Karten, Transport, Fräsen der Kavitäten für die Chipmodule, Transport, Stapeln der Gutkarten im Gutkarten-Stapelmagazin 8.

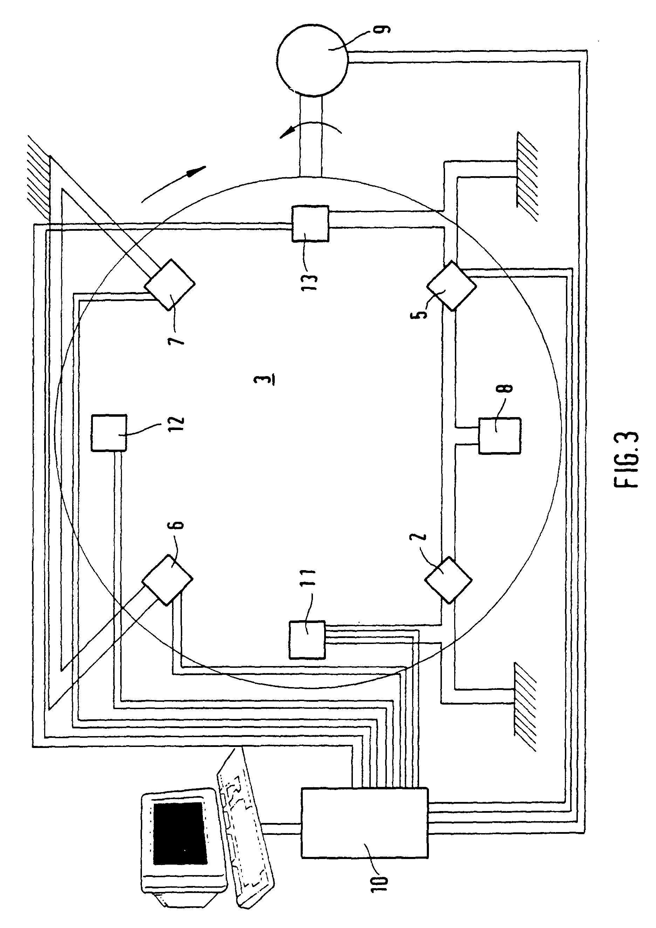

Fig. 3 zeigt eine zweite Ausführungsform der erfindungsgemäßen Taschenfräsanlage, bestehend aus Steuerung 10, Vereinzeler 2, erster Kamera 11, erstem Kartenwender 6, zweiter Kamera 12, Ausschusskarten-Stapelmagazin 7, zweitem Kartenwender 13, Taschenfräsmaschine 5, Gutkarten-Stapelmagazin 8, Drehteller 3, Antriebseinheit 9 für den Drehteller 3.

Ablauf: Füllen der Karten in das Magazin des Vereinzelers 2, Vereinzeln, Transport, Aufnahme eines Bildes von einer Seite der Chipkarten, Wenden der Karten, Aufnahme eines Bildes von der anderen Seite der Chipkarten, Transport, Stapeln der Ausschusskarten im Ausschusskarten-Stapelmagazin 7, Transport, Wenden bzw. Drehen der in falscher Lage ankommenden Karten, Transport, Fräsen der Kavitäten für die Chipmodule, Transport, Stapeln der Gutkarten im Gutkarten-Stapelmagazin 8.

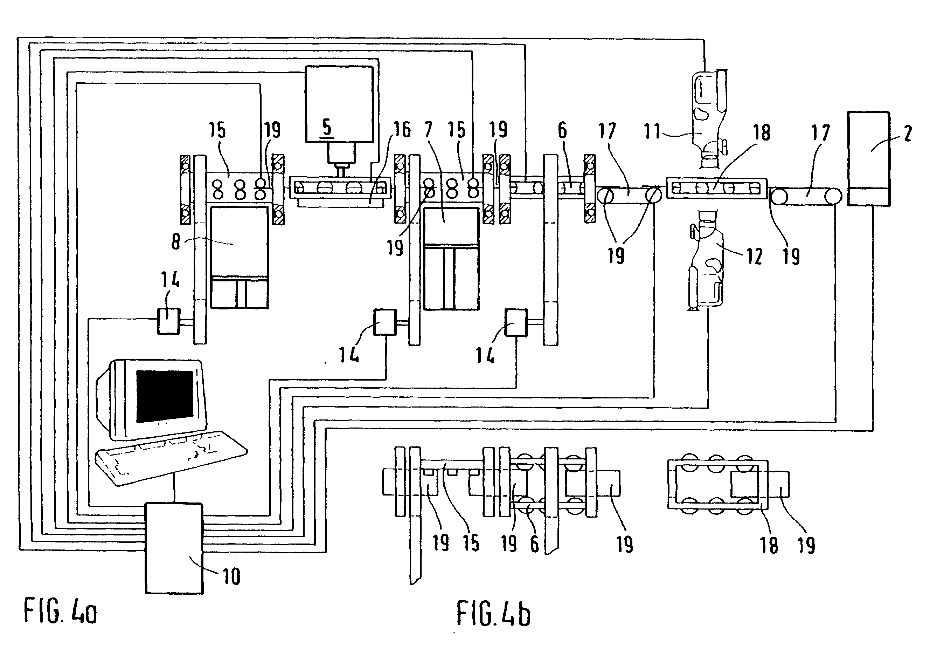

Fig. 4a zeigt eine dritte Ausführungsform der erfindungsgemäßen Taschenfräsanlage, bestehend aus Motoren 14 für Zahnriemenantriebe des Kartenwenders 6 und der Ablageeinrichtung 15, Gutkarten-Stapelmagazin 8, Karten-Ablageeinrichtung 15, Taschenfräsmaschine 5, Frästisch 16 mit Transporteinrichtung, Ausschusskarten-Stapelmagazin 7, Kartenwender 6, Transportband 17, Kameras 11 und 12, Transporteinrichtung 18, die eine Sicht von oben und unten jeweils auf die gesamte Kartenoberfläche zulässt, Transportband 17, Vereinzeler 2 mit Magazin, Steuerung 10, Chipkarten 19.

Fig. 4b zeigt eine Aufsicht auf einen Ausschnitt der Fig. 4a, in dem die Karten-Ablageeinrichtung 15, der Kartenwender 6 und die Transporteinrichtung 18 dargestellt sind, die eine Sicht von oben und unten auf die Karten 19 ermöglichen.

Ablauf: Füllen der Karten 19 in das Magazin des Vereinzelers 2, Vereinzeln, Transport, Aufnahme von Bildern beider Seiten der Karten 19, Wenden der Karten 19, die in falscher Lage ankommen, Transport, Stapeln der Ausschusskarten mit Hilfe einer Karten-Ablageeinrichtung 15 im Ausschusskarten-Stapelmagazin 7, Transport, Fräsen der Kavitäten für die Chipmodule, Transport, Stapeln der Gutkarten mit Hilfe einer Karten-Ablageeinrichtung 15 im Gutkarten-Stapelmagazin 8.

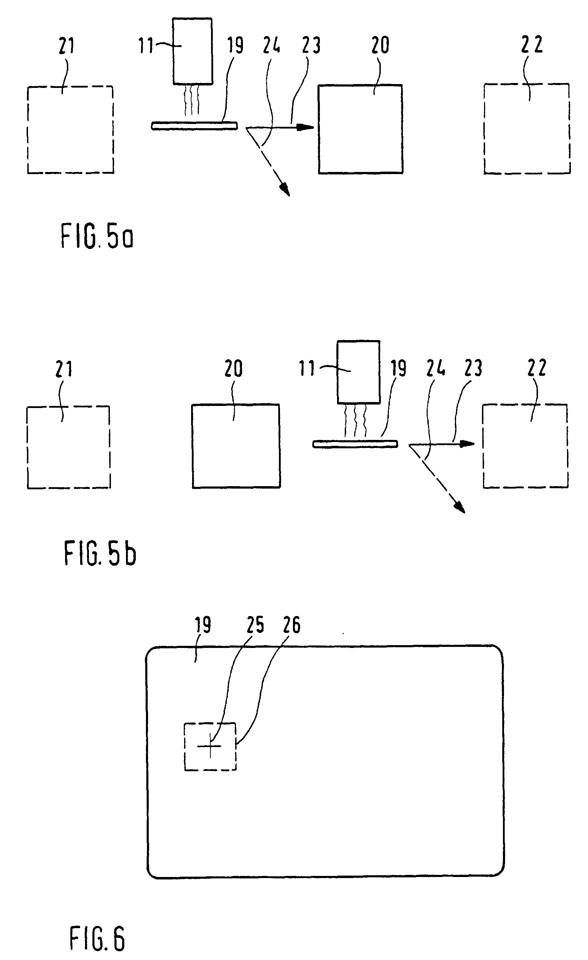

Fig. 5a und 5b zeigen eine schematische Darstellung einer Produktionsanlage für kartenförmige Datenträger zur Veranschaulichung des der Erfindung zugrundeliegenden Prinzips.

In Fig. 5a ist die erste Variante der Erfindung dargestellt, gemäß der die optische Prüfung der Karte 19 vor dem Herstellungsschritt erfolgt. Der hier zu betrachtende Herstellungsschritt findet in der Bearbeitungsstation 20 statt. Durch die gestrichelt gezeichneten Blöcke 21 und 22 soll veranschaulicht werden, dass die Karte 19 vor und nach der Bearbeitungsstation 20 weitere Bearbeitungsstationen durchlaufen kann. Die Transportrichtung der Karte 19 ist durch einen Pfeil 23 dargestellt. Bezogen auf diese Transportrichtung vor der Bearbeitungsstation 20 ist eine optische Prüfstation 11, beispielsweise in Form einer Kamera angeordnet. Die optische Prüfstation 11 führt eine optische Prüfung der Karte 19 durch, beispielsweise eine Prüfung der Lage der Karte 19, des Kartentyps oder der Qualität. Abhängig vom Ergebnis der Prüfung wird die Karte 19 entweder der Bearbeitungsstation 20 zugeführt (Pfeil 23) oder ausgesondert (Pfeil 24). Falls die ausgesonderte Karte 19 noch brauchbar ist, kann sie dem Herstellungsprozess an anderer Stelle wieder zugeführt werden. Falls sich die optische Prüfung auf die Lage der Karte 19 bezieht, ist die Prüfstation 11 so anzuordnen, dass zwischen der Prüfstation 11 und der Fertigungsstation 20 eine unerwünschte Lageänderung der Karte 19 ausgeschlossen werden kann. Prinzipiell ist eine Prüfung der Lage der Karte 19 immer nur dann erforderlich, wenn seit dem letzten Ort, an dem die Lage der Karte 19 noch definitiv bekannt war, eine unerwünschte Lageänderung möglich ist. Eine mögliche Vorgehensweise zur messtechnischen Ermittlung der Lage der Karte wird anhand von Fig. 6 erläutert.

In Fig. 5b ist eine Produktionsanlage dargestellt, gemäß der die optische Prüfung der Karte 19 nach dem Herstellungsschritt erfolgt. Fig. 5b stimmt weitgehend mit Fig. 5a überein und unterscheidet sich lediglich darin, dass die optische Prüfstation 11 bezogen auf die Transportrichtung der Karte 19 nach der Bearbeitungsstation 20 angeordnet ist und somit eine Erfolgskontrolle des in der Bearbeitungsstation 20 durchgeführten Herstellungsschrittes bzw. der durchgeführten Herstellungsschritte ermöglicht.

Im Rahmen einer Fertigungsanlage für Karten können im Prinzip alle Bearbeitungsstationen mit einer optischen Prüfstation vor oder/und nach der Bearbeitungsstation ausgestattet werden. Besonders empfehlenswert ist eine optische Prüfstation für alle Bearbeitungsstationen, die eine irreversible oder eine nur unter Aufwendung zusätzlicher Kosten reversible Änderung an der Karte vornehmen.

Durch Anordnen der Prüfstation vor der Bearbeitungsstation wird verhindert, dass infolge einer Falschlage der Karte oder eines falschen Kartentyps Ausschuss, z.B. beim Fräsen der Kavität erzeugt wird. Ebenso kann verhindert werden, dass eine Ausschusskarte weiterbearbeitet wird und der Schaden, z.B. durch Anbringen weiterer Komponenten, wie beispielsweise einem Chipmodul noch vergrößert wird.

Durch Anordnen der Prüfstation nach der Bearbeitungsstation kann die Bearbeitungsstation einer permanenten Qualitätskontrolle unterzogen werden oder es kann auch bedarfsweise durch zeitweise Aktivierung der Prüfstation kontrolliert werden.

Fig. 6 zeigt eine Karte 19, die mit einer Markierung 25 versehen ist, anhand derer die Lagerichtigkeit der Karte 19 geprüft werden kann. Die Markierung 25 ist in Form eines Fadenkreuzes ausgebildet und im Bereich 26 der Kavität angeordnet, damit das optische Erscheinungsbild der Karte 19 nicht beeinträchtigt wird. Die Markierung 25 kann sowohl auf einer Karte angebracht werden, bei der die Kavität noch nicht ausgefräst bzw. auf andere Art und Weise hergestellt ist als auch auf einer Karte, die bereits eine Kavität aufweist. Im letzten Fall wird die Markierung 25 auf dem Boden der Kavität aufgebracht. Indem die optische Prüfstation feststellt, ob die Markierung 25 vorhanden ist (einseitige Prüfstation) bzw. auf welcher Kartenseite die Markierung angeordnet ist (zweiseitige Prüfstation) kann ermittelt werden, ob die Karte bezüglich Vorder- und Rückseite lagerichtig ist. Da die Markierung 25 außerhalb der Symmetrielinien der Karte 19 aufgebracht ist, kann zudem festgestellt werden, ob die Karte 19 verdreht ist. Abhängig vom Prüfungsergebnis kann die Karte 19 ausgesondert werden oder es kann eine Wendeeinrichtung vorgesehen sein, die die Karte 19 in die gewünschte Lage bringt.

Neben den bereits erwähnten Anwendungen kann die optische Prüfstation auch derart ausgebildet sein, dass damit die Position und/oder die Struktur von Prägungen oder charakteristischen Druckbildelementen auf der Karte geprüft werden können. Weiterhin ist es auch möglich, das Kartenmaterial, beispielsweise mit Hilfe eines Infrarot- oder UV-Detektors auf bestimmte Eigenschaften hin zu prüfen, insbesondere auch auf Materialeigenschaften, die für eine spätere Echtheitsprüfung herangezogen werden. Bei Karten, bei denen ein Modul und/oder eine Antenne oder andere Komponenten in den Kartenkörper integriert werden, besteht die Möglichkeit, die Position der Komponenten im Durchlicht oder mit Hilfe von Infrarotlicht zu prüfen und beispielsweise auch eine Überlappung mit dem Bereich der Kavität oder anderen relevanten Kartenelementen, wie z.B. Hochprägebereich, Laserbereich etc. festzustellen.

Die optische Inspektion am Bogen oder an Bahnen, aus denen später die Karten hergestellt werden, kann sowohl einseitig als auch beidseitig erfolgen. Je nach Art der Prüfung ist eine ganzflächige Inspektion oder nur eine partielle Inspektion, beispielsweise eines ausgewählten Streifens bzw. einer ausgewählten Bahn erforderlich. Des Weiteren kann die optische Prüfstation auch dafür vorgesehen sein, auf den Bogen oder den Bahnen aufgebrachte Kennungen zu erfassen und zur weiteren Auswertung an die Prozesssteuerung weiterzuleiten oder mit einem Drucker (Ink jet etc.) Kennungen (z.B. erfasste Qualitätssicherungsdaten) auf die Bogen zur späteren Weiterverarbeitung der Daten aufzubringen. Darüber hinaus kann auch die Oberflächengüte der Bahnen oder Bogen durch entsprechende Reflexions- bzw. Glanzwinkelmessungen geprüft werden. Ebenso kann auch die Bogen- oder Bahndicke ermittelt werden und es können verschiedene Prüfungen bezüglich der Planlage, der Welligkeit, der Deformation und der Kantenqualität durchgeführt werden.

Die optische Prüfstation kann auch so ausgebildet werden, dass sie Spezialdrucke, wie beispielsweise Fluoreszenzdrucke, Drucke mit optisch variablen Farben, Iriodindrucke usw prüfen kann. Im Übrigen ist es auch möglich, neben der Lage von aufgebrachten Chipmodulen, die Positionierung von beliebigen Komponenten, wie beispielsweise Magnetstreifen, Unterschriftsstreifen sowie Hologramm- oder Diffraktionsstrukturelemente oder Linsenraster-Strukturen zu prüfen.

Insgesamt lässt sich sagen, dass im Rahmen der vorstehenden Erfindung sämtliche für die Fertigung von kartenförmigen Datenträgern erforderlichen optischen Prüfungen vorgenommen werden können. Gemäß der Erfindung werden diese Prüfungen nach ihrer Notwendigkeit den entsprechenden Herstellungsschritten zugeordnet und dadurch wird eine vollautomatische Kontrolle der Fertigung erreicht, durch die die Ausschussraten auf ein Minimum reduziert werden können und gleichzeitig die Maschinen optimal genutzt werden können.

## Patentansprüche

1. Verfahren zur Herstellung von kartenförmigen Datenträgern, bestehend aus mehreren Herstellungsschritten, wobei wenigstens ein Herstellungsschritt eine bestimmte Lage, einen bestimmten Typ oder eine bestimmte Qualität des Datenträgers erfordert und/oder Veränderungen an dem Datenträger vornimmt, die irreversibel sind oder nur durch zusätzlichen Aufwand rückgängig gemacht werden können, wobei der Datenträger vor dem genannten Herstellungsschritt einer optischen Prüfstation zugeführt wird, von der optischen Prüfstation eine Prüfung des Datenträgers vorgenommen wird und der Datenträger abhängig vom Ergebnis der Prüfung der vorgesehenen Weiterverarbeitung zugeführt oder entnommen wird, **dadurch gekennzeichnet, daß** die Lage des Datenträgers durch die optische Prüfstation anhand eines auf dem Datenträger aufgebrachten Druckbildes geprüft wird.

2. Verfahren nach Anspruch 1, **dadurch gekennzeichnet, dass** jeder Datenträger einzeln der Prüfung unterzogen wird.

3. Verfahren nach Anspruch 1, **dadurch gekennzeichnet, dass** mehrere Datenträger auf einem Bogen oder einer Bahn angeordnet sind, und dieser Bogen oder diese Bahn der Prüfung zugeführt wird.

4. Verfahren nach einem der Ansprüche 1 bis 3, **dadurch gekennzeichnet, dass** es sich bei der Prüfung um eine Lageprüfung des Datenträgers handelt, und dass der Datenträger die optische Prüfstation ohne weitere Konsequenzen passiert, falls von der optischen Prüfstation eine richtige Lage des Datenträgers festgestellt wird.

5. Verfahren nach einem der Ansprüche 1 bis 3, **dadurch gekennzeichnet, dass** der Datenträger einer Wendeeinrichtung zugeführt wird, und von dieser Wendeeinrichtung in die richtige Lage gebracht wird, falls von der optischen Prüfstation eine falsche Lage festgestellt wird.

6. Verfahren nach einem der Ansprüche 1 bis 3, **dadurch gekennzeichnet, dass** der Datenträger ausgesondert wird, falls von der optischen Prüfstation eine falsche Lage festgestellt wird.

7. Verfahren nach einem der Ansprüche 1 bis 3, **dadurch gekennzeichnet, dass** die Lage des Datenträgers anhand einer auf den Datenträger aufgebrachten Markierung erkannt wird.

8. Verfahren nach Anspruch 1 oder 2, **dadurch gekennzeichnet, dass** die optische Prüfstation den Kartentyp erkennt und das entsprechende Fräsprogramm aufruft oder die Karte zurückweist, wenn der erkannte Kartentyp nicht einem erwarteten Kartentyp entspricht.

9. Verfahren nach Anspruch 1, **dadurch gekennzeichnet, dass** aus dem Ergebnis der Prüfung ermittelt wird, ob im vorhergehenden Herstellungsschritt Mindestanforderungen an die Qualität eingehalten wurden.

10. Vorrichtung zur Herstellung kartenförmiger Datenträger, die mehrere Bearbeitungsstationen umfasst, wobei wenigstens eine Bearbeitungsstation eine bestimmte Lage, einen bestimmten Typ oder eine bestimmte Qualität des Datenträgers erfordert, und/oder Veränderungen am Datenträger vornimmt, die irreversibel sind oder nur mit zusätzlichem Aufwand rückgängig gemacht werden können, wobei wenigstens eine optische Prüfstation vorgesehen ist, die eine Prüfung des Datenträgers vornimmt, wenigstens eine Transporteinrichtung zum Transportieren des Datenträgers vorgesehen ist, die wenigstens eine optische Prüfstation in Transportrichtung des Datenträgers gesehen vor der genannten Bearbeitungsstation angeordnet ist, und eine Steuerung vorgesehen ist, die den Datenträger abhängig vom Ergebnis der Prüfung in der optischen Prüfstation der vorgesehenen Weiterverarbeitung zuführt oder entnimmt **dadurch gekennzeichnet, daß** die optische Prüfstation zur Prüfung der Lage des Datenträgers anhand eines darauf aufgebrachten Druckbildes ausgelegt ist.

11. Vorrichtung nach Anspruch 10, **dadurch gekennzeichnet, dass** wenigstens eine Wendeeinrichtung vorgesehen ist, die dann, wenn von der optischen Prüfstation eine Falschlage des Datenträgers festgestellt wurde, den Datenträger in die richtige Lage bringt.

12. Vorrichtung nach Anspruch 10, **dadurch gekennzeichnet, dass** die optische Prüfstation eine UV-Lichtquelle und einen fluoreszenzlichtempfindlichen Detektor aufweist.

13. Vorrichtung nach Anspruch 10, **dadurch gekennzeichnet, dass** die optische Prüfstation eine Kamera aufweist.

14. Vorrichtung nach Anspruch 10, **dadurch gekennzeichnet, dass** die optische Prüfstation zwei Kameras aufweist, die beidseits des Datenträgers angeordnet sind.

15. Vorrichtung nach einem der vorhergehenden Ansprüche, **dadurch gekennzeichnet, dass** eine Bearbeitungsstation eine Fräsanlage ist.

16. Vorrichtung nach einem der Ansprüche 10 bis 14, **dadurch gekennzeichnet, dass** eine Bearbeitungsstation ein Implanter ist.

## Claims

1. A method for producing card-shaped data carriers consisting of a plurality of production steps, at least one step requiring a certain position, type or quality of the data carrier and/or making changes on the data carrier which are irreversible or can be reversed only by additional expense, the data carrier being supplied to an optical testing station before said production step, the optical testing station performing a test on the data carrier, and the data carrier being supplied to or removed from intended further processing depending on the result of testing, **characterized in that** the position of the data carrier is tested by the optical testing station with reference to a printed image applied to the data carrier.

2. A method according to claim 1, **characterized in that** each data carrier is subjected to testing singly.

3. A method according to claim 1, **characterized in that** a plurality of data carriers are disposed on a sheet or web, and said sheet or web is supplied to testing.

4. A method according to any of claims 1 to 3, **characterized in that** the test is a test of the data carrier position, and the data carrier passes through the optical testing station without consequences if the optical testing station ascertains a proper position of the data carrier.

5. A method according to any of claims 1 to 3, **characterized in that** the data carrier is supplied to a reversing device and brought into the right position by said reversing device if the optical testing station ascertains a wrong position.

6. A method according to any of claims 1 to 3, **characterized in that** the data carrier is eliminated if the optical testing station ascertains a wrong position.

7. A method according to any of claims 1 to 3, **characterized in that** the data carrier position is tested with reference to a marking applied to the data carrier

8. A method according to claim 1 or 2, **characterized in that** the optical testing station recognizes the type of card and requests the corresponding milling program or rejects the card if the recognized type of card does not correspond to an expected type of card.

9. A method according to claim 1, **characterized in that** it is determined from the result of testing whether minimum quality requirements were met in the preceding production step.

10. An apparatus for producing card-shaped data carriers comprising a plurality of processing stations, at least one station requiring a certain position, type or quality of the data carrier and/or making changes on the data carrier which are irreversible or can only be reversed with additional expense, at least one optical testing station being provided for performing a test on the data carrier, at least one transport device being provided for transporting the data carrier, the at least one optical testing station being disposed before said processing station, regarded in the transport direction of the data carrier, and a control unit being provided for supplying the data carrier to, or removing it from, intended further processing depending on the result of testing in the optical testing station, **characterized in that** the optical testing station is designed to test the position of the data carrier with reference to a printed image applied thereto. .

11. An apparatus according to claim 10, **characterized in that** at least one reversing device is provided for bringing the data carrier into the right position if a wrong position of the data carrier was ascertained by the optical testing station.

12. An apparatus according to claim 10, **characterized in that** the optical testing station has a UV light source and a detector sensitive to fluorescent light.

13. An apparatus according to claim 10, **characterized in that** the optical testing station has a camera.

14. An apparatus according to claim 10, **characterized in that** the optical testing station has two cameras disposed on both sides of the data carrier.

15. An apparatus according to any of the above claims, **characterized in that** one processing station is a milling machine.

16. An apparatus according to any of claims 10 to 14, **characterized in that** one processing station is an implanter.

## Revendications

1. Procédé pour la fabrication de support de données en forme de carte, comportant plusieurs étapes de fabrication, de telle manière qu'une étape de la fabrication au moins requière un positionnement particulier du support de données, un type particulier ou une qualité particulière de support de données et / ou des modifications au niveau du support de données, qui sont irréversibles ou qui ne peuvent être supprimées qu'en occasionnant une dépense supplémentaire, dans lequel le support de données alimente une station de test optique avant ladite étape de fabrication, un test du support de données étant effectué par la station de test optique et en fonction du résultat du test, le support de données passe au traitement ultérieur ou est enlevé, **caractérisé en ce que** le positionnement du support de données est testé au moyen de la station de tests optique à partir d'une présentation de l'impression appliquée sur le support de données.

2. Procédé selon la revendication 1 **caractérisé en ce que** chaque support de données est soumis individuellement à un examen.

3. Procédé selon la revendication 1 **caractérisé en ce que** plusieurs supports de données sont agencés sur un arc ou un rail et cet arc ou ce rail alimente le test.

4. Procédé selon l'une quelconque des revendications 1 à 3, **caractérisé en ce que** dans le cas du test, il s'agit d'un test de positionnement du support de données et que le support de données traverse la station de test optique sans autre conséquence, dans le cas où la station de test optique détermine que le positionnement du support de données est bon.

5. Procédé selon l'une quelconque des revendications 1 à 3, **caractérisé en ce que** le support de données alimente un dispositif de retournement et qu'il est amené dans la position idoine au moyen de ce dispositif de retournement, si la station de test optique constate un mauvais positionnement.

6. Procédé selon l'une quelconque des revendications 1 à 3, **caractérisé en ce que** le support de données est éliminé, si la station de test optique constate un mauvais positionnement.

7. Procédé selon l'une quelconque des revendications 1 à 3, **caractérisé en ce que** le positionnement du support de données est identifié à l'aide d'un repère apposé sur le support de données.

8. Procédé selon la revendication 1 ou 2 **caractérisé en ce que** la station de test optique identifie le type de carte et appelle le programme de fraisage correspondant ou rejette la carte si le type de cartes reconnu ne correspond pas à un type de carte attendu.

9. Procédé selon la revendication 1, **caractérisé en ce que** le résultat du test permet de déterminer si les exigences minimales concernant la qualité ont été respectées au cours de l'étape précédente de la fabrication.

10. Dispositif pour la fabrication d'un support de données sous forme de carte, comprenant plusieurs station de traitement, de telle manière qu'au moins une station de traitement requière un positionnement particulier, un type particulier ou une qualité particulière de support de données, et / ou des modifications au niveau du support de données, qui sont irréversibles ou qui ne peuvent être supprimées qu'en occasionnant une dépense supplémentaire, une station de test optique qui effectue l'examen du support de données étant prévue, au moins un dispositif de transport, au moins une station de test optique étant agencée dans le sens du transport du support de données avant ladite station de traitement et une commande étant prévue, cette dernière permettant au support de données de passer au traitement ultérieur ou, en fonction du résultat du test dans la station de test optique, de l'enlever, **caractérisé en ce que** la station de test optique est prévue pour le test de positionnement du support de données à partir d'une présentation de l'impression appliquée sur ce dernier.

11. Dispositif selon la revendication 10, **caractérisé en ce qu'**au moins un dispositif de retournement est prévu, lequel ramène le support de donnée au bon positionnement, si un mauvais positionnent est déterminé par la station de test optique.

12. Dispositif selon la revendication 10, **caractérisé en ce que** la station de test optique présente une source de lumière UV et un détecteur sensible à la lumière fluorescente.

13. Dispositif selon la revendication 10, **caractérisé en ce que** la station de test optique présente une caméra.

14. Dispositif selon la revendication 10, **caractérisé en ce que** la station de test optique présente deux caméras, qui sont agencées de part et d'autre du support de données.

15. Dispositif selon l'une quelconque des revendications précédentes, **caractérisé en ce que** une station de traitement est une installation de fraisage.

16. Dispositif selon l'une quelconque des revendications 10 à 14, **caractérisé en ce qu'**une station de traitement est un système d'implantation.
